# EUROPÄISCHE PATENTSCHRIFT

(11) **EP 0 917 928 B1**
(45) Veröffentlichungstag und Bekanntmachung des Hinweises auf die Patenterteilung: **14.07.1999**
(21) Anmeldenummer: 97109564.1
(22) Anmeldetag: 12.06.1997
(51) Int. Cl.: B23Q 1/00, F16M 7/00, F16M 11/14

(54) **Nivellierelement**
Levelling element
Dispositif de régulation de niveau

(43) Veröffentlichungstag der Anmeldung: 26.05.1999
(73) Patentinhaber: Air Loc Schrepfer AG, 8700 Küsnacht (CH)
(72) Erfinder: Zanini, Stefano, 8700 Küsnacht/ZH (CH)
(74) Vertreter: Hoffmann, Eckart, Dipl.-Ing.

(56) Entgegenhaltungen:
- EP-A- 0 115 597
- EP-A- 0 159 001
- DE-U- 29 510 221
- US-A- 1 334 496
- US-A- 4 368 864

## Beschreibung

Die vorliegende Erfindung betrifft ein Nivellierelement gemäß dem Oberbegriff des Anspruchs 1 zur höhen- und neigungsverstellbaren Lagerung eines Gegenstands, etwa einer Maschine, auf einer Tragfläche.

Aus der EP-A-0 115 597 ist ein Nivellierelement bekannt, das eine Tragplatte sowie einen sich darauf abstützenden Schraubenbolzen umfaßt. Die Tragplatte weist eine nach oben offene kegelstumpfförmige Pfanne auf. In einer oberhalb der Pfanne in der Oberseite der Tragplatte angeordneten zylinderförmigen Ausnehmung, deren Durchmesser größer als der größte Durchmesser der Pfanne ist, ist ein Riegelglied eingesetzt, welches aus einem mit der Tragplatte fest verbundenen ringförmigen Tragabschnitt und aus einem Federabschnitt in Form eines dünnwandigen, tellerförmigen Rings besteht. Dieser tellerförmige Ring ist bezüglich der Mittelachse der kegelstumpfförmigen Pfanne so geneigt, daß sein radial innerer Rand tiefer liegt als sein radial äußerer Rand. In die Tragplatte wird von oben der Schraubenbolzen eingeführt, dessen unteres Ende eine Umfangsnut aufweist, an die sich nach unten hin ein zylindrischer Abschnitt anschließt, welcher von einer das untere Ende des Schraubenbolzens bildenden konvex gewölbten Stirnfläche gefolgt ist. Der lichte Durchmesser des tellerförmigen Rings ist größer als der Durchmesser des Schraubenbolzens am Grund der Umfangsnut und kleiner als der Außendurchmesser des zylindrischen Abschnitts. Damit schnappt der tellerförmige Ring beim Einführen des Schraubenbolzens in die kegelstumpfförmige Pfanne in die Nut ein, wodurch die Tragplatte unverlierbar mit dem Schraubenbolzen verbunden bleibt. Dadurch kann eine mit einem derartigen Nivellierelement ausgerüstete Maschine beim Transport oder bei der Montage ohne weiteres versetzt werden, ohne daß die Gefahr besteht, daß die Tragplatte verloren geht und eventuell sogar der Rahmen der bei Verlust der Tragplatte oder Beschädigung des Nivellierelements nicht mehr korrekt abgestützten Maschine beschädigt wird.

Beim Anheben derart abgestützter Maschinen ergibt sich jedoch - insbesondere bei längeren Standzeiten - folgendes Problem: Der Boden derartiger Nivellierelemente besteht aus Kunststoff zur Schwingungsisolierung. Dieser Kunststoff klebt bei den von den gelagerten Maschinen auf die Nivellierelemente ausgeübten hohen Drucken leicht am Boden von Maschinenhallen fest und geht nicht selten eine fest haftende Verbindung damit ein. Damit ergibt sich eine sehr starke Haftung, die in der Regel höher als die 200 bis 300 kg Zugbelastbarkeit des vorstehend beschriebenen tellerförmigen Rings ist. Wenn nun eine mit derartigen Nivellierelementen gelagerte Maschine vom Boden abgehoben wird, reißen die tellerförmigen Ringe aus und werden meist sogar dadurch beschädigt. Das Wiedereinsetzen der ausgerissenen bzw. das Auswechseln der beschädigten Nivellierelemente sowie die dadurch hervorgerufenen Verzögerungen beim Transport der Maschinen steigern die Kosten und sind daher unerwünscht.

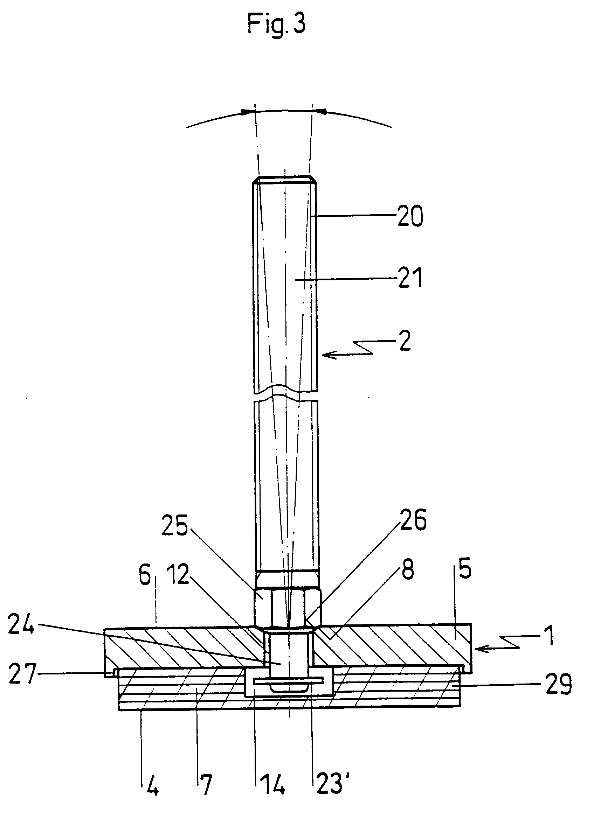

Um dieses Problem zu lösen, wurde ein weiteres Nivellierelement entwickelt, das in Fig. 3 dargestellt ist. Dieses Nivellierelement zur höhen- und neigungsverstellbaren Lagerung eines Gegenstands auf einer Tragfläche umfaßt einen Auflagekörper 1 und einen mit diesem unverlierbar verbundenen Nivellierbolzen 2. Der Auflagekörper 1 weist eine vom Gegenstand abgewandte Unterseite 4 zur Auflage auf der Tragfläche und eine dem Gegenstand zugewandte Oberseite 6 auf, an der eine rotationssymmetrische Stützfläche 8 ausgebildet ist, von welcher ein zu ihrer Symmetrieachse koaxiales, sich zur Unterseite 4 hin erstreckendes Loch 12 ausgeht, das an seinem unteren Ende in eine Aussparung 14 mündet, deren Durchmesser größer als der Durchmesser des Lochs 12 ist. Der Nivellierbolzen 2 weist einen zur höhenverstellbaren Kopplung mit dem Gegenstand dienenden Schaft 21 auf, der in einem Auflagekopf 25 endet, dessen dem Schaft 21 abgewandte Fläche eine an die Stützfläche 8 des Auflagekörpers 1 angepaßte rotationssymmetrische Auflagefläche 26 aufweist, von welcher ein zu ihrer Symmetrieachse und zum Schaft 21 koaxialer Steg 24 ausgeht, an dessen dem Auflagekopf 25 abgewandten Ende ein Anschlag 23' vorhanden ist, dessen Durchmesser größer als der des Stegs 24 ist. Hierbei sind die Abmessungen so gewählt sowie die Stützfläche 8 und die Auflagefläche 26 so beschaffen, daß bei auf der Stützfläche 8 aufliegender Auflagefläche 26 der Steg 24 mit einem solchen Spiel in dem Loch 12 liegt und der Anschlag 23' von den Begrenzungsflächen der Aussparung 14 so beabstandet ist, daß der Nivellierbolzen 2 gegen die Symmetrieachse der Stützfläche 8 verschwenkbar und in zu dieser Symmetrieachse senkrechten Richtungen unverschiebbar gehaltert ist, und der Durchmesser des Anschlags 23' ist so gewählt, daß er ein Herausziehen des Stegs 24 aus dem Loch 12 verhindert. Der als Sicherungsring in eine nicht dargestellte Umfangsnut des Stegs 24 eingreifende Anschlag 23' aus Metall kann beim Abheben des Gegenstands vom Boden bei noch wesentlich höheren Kräften als den in Verbindung mit der EP-A-0 115 597 genannten ein Herausziehen des Stegs 24 aus dem Loch 12 verhindern. Die Verschwenkbarkeit des Nivellierbolzens ist durch mit entsprechenden Pfeilen versehene, gegen die Vertikale geneigte Mittellinien angedeutet.

Bei dem in Fig. 3 dargestellten Nivellierbolzen besteht der Auflagekörper 1 aus einem dem Gegenstand zugewandten Oberteil 5 und einem vom Gegenstand abgewandten Unterteil 7, welches in der Regel aus schwingungsisolierendem Material besteht. Um ein Nivellierelement zusammenzusetzen, wird zunächst der Steg 24 des Schafts 21 des Nivellierbolzens 2 von oben durch das Loch 12 des Oberteils 5 geführt, wonach der Anschlag 23' in Form eines Sicherungsrings an dem dem Auflagekopf 25 abgewandten Ende des Stegs 24 befestigt wird. Danach wird das Unterteil 7 dauerhaft am Oberteil 5 befestigt, was meistens durch Verkleben erfolgt. Sobald das Oberteil 5 und das Unterteil 7 miteinander verbunden sind, ist ein Entfernen des Nivellierbolzens 2 vom Auflagekörper 1 ohne Zerstörung eines dieser Bestandteile nicht mehr möglich. Dies hat zum einen den Nachteil, daß bei einem bereits zusammengesetzten Nivellierelement der Nivellierbolzen nicht mehr ausgetauscht werden kann - beispielsweise zur Anpassung an eine andere zu lagernde Maschine. Zum anderen ist dies insofern nachteilig, als der fertig montierte Nivellierbolzen sehr groß und unhandlich ist, was ungünstig für den Transport und die Lagerung ist.

Es ist eine Aufgabe der vorliegenden Erfindung, ein stabiles Nivellierelement zur höhen- und neigungsverstellbaren Lagerung eines Gegenstands auf einer Tragfläche zu schaffen, bei dem der Nivellierbolzen einerseits unverlierbar mit dem Auflagekörper verbunden und andererseits bei Bedarf austauschbar bzw. entfernbar ist.

Diese Aufgabe wird durch ein Nivellierelement gemäß Anspruch 1 gelöst. Vorteilhafte Weiterbildungen sind in den Unteransprüchen beschrieben.

Bei dem erfindungsgemäßen Nivellierelement kann der mit einem Außengewinde versehene Anschlag des Nivellierbolzens in das mit einem entsprechenden Innengewinde versehene Loch des Auflagekörpers eingeschraubt werden, bis der Anschlag in die Aussparung durchfällt. In dieser Stellung haben der Anschlag und der Steg in der Aussparung bzw. dem Loch genügend Spiel für ein Verschwenken der Symmetrieachse des Nivellierbolzens bezüglich der Symmetrieachse des Auflagekörpers. Gleichzeitig verhindert jedoch der Anschlag, daß der Nivellierbolzen beim Anheben des gelagerten Gegenstands nach oben aus dem Auflagekörper herausgezogen wird.

Gemäß einer vorteilhaften Weiterbildung der Erfindung ist die Stützfläche des Auflagekörpers kalottenförmig und die Auflagefläche dazu komplementär. Dies hat den Vorteil, daß die zu stützende Last nicht nur über eine Linienberührung, sondern flächig auf den Auflagekörper übertragen werden kann. Dadurch wird eine Beschädigung der Stütz- und der Auflagefläche selbst dann vermieden, wenn der Nivellierbolzen mit hoher Last beaufschlagt wird.

Es ist vorteilhaft, wenn die Stützfläche des Auflagekörpers eine konkave Fläche und die Auflagefläche des Nivellierbolzens eine konvexe Fläche ist, da der Auflagekörper in diesem Fall keine vorspringende und relativ leicht zu beschädigende Stützfläche aufweist und eine für den Transport und die Lagerhaltung kleinere Verpackungsgröße ermöglicht. Die Größe der für den Nivellierbolzen erforderlichen Verpackung wird durch die konvexe Ausgestaltung der Auflagefläche nicht beeinflußt.

Wenn der Schaft ein Außengewinde aufweist, kann der Nivellierbolzen von unten in eine Bohrung in einer zu lagernden Maschine eingeschraubt werden. Wenn die Bohrung in der Maschine eine Sackbohrung ist, ist es vorteilhaft, einen Abschnitt des Schafts oberhalb der Auflagefläche so auszubilden, daß er für den Angriff eines Werkszeugs zum Drehen des Schafts geeignet ausgebildet ist, beispielsweise in Form eines Außensechskants. Die Nivellierung kann dann durch Angriff am Nivellierbolzen unterhalb der zu lagernden Maschine erfolgen. Wenn die Bohrung jedoch durchgängig ist, kann der für den Angriff des Werkzeugs geeignete Abschnitt auch am oberen Ende des Schafts ausgebildet sein, beispielsweise in Form eines Außensechskants, dessen radiale Länge kleiner als der Außendurchmesser des Schafts ist. Bei dieser Ausgestaltung kann die Nivellierung und Höhenverstellung von oberhalb des Maschinenteils erfolgen, den der Nivellierbolzen durchdringt.

Die Aussparung im Auflagekörper ist bei spanabhebendem Herstellungsverfahren wesentlich einfacher herzustellen, wenn er aus einem die Stützfläche und das Loch enthaltenden Oberteil und einem mit diesem verbundenen Unterteil zusammengesetzt ist. Bei der Herstellung im Gußverfahren kann die Aussparung bereits bei der Formgebung der Gießform berücksichtigt werden. Dies ermöglicht es, keinen weiteren, zusätzlichen Arbeitsschritt für die Bildung der Aussparung bei der Herstellung des Unterteils vorsehen zu müssen. Außerdem wird dadurch die Funktion des Unterteils nicht durch eine Materialschwächung beeinträchtigt. Dies ist insbesondere dann von Bedeutung, wenn unterhalb des Oberteils mindestens eine Lage aus schwingungsisolierendem Material angeordnet ist oder sogar das ganze Unterteil aus dem schwingungsisolierendem Material besteht.

Das Oberteil wird meistens mit Hilfe eines Klebers, beispielsweise eines Mehrkomponentenklebers, mit dem Unterteil verklebt. Wenn das Oberteil an seiner Unterseite am Außenrand einen Vorsprung in Form eines Rings aufweist, der sich über einen Teil der axialen Länge des Unterteils radial außerhalb von diesem erstreckt, kann eine Beanspruchung der Klebestelle zwischen Oberteil und Unterteil längs ihren Kontaktflächen verhindert werden, und infolge des Anpreßdrucks zwischen Ober- und Unterteil möglicherweise radial nach außen austretender Klebstoff gelangt nicht auf die Umfangsfläche des Auflagekörpers. Dieselbe Funktion der Verhinderung der Beanspruchung kann auch erreicht werden, wenn statt des Rings ein sich ebenfalls axial erstreckender, mehr als den halben Umfang umspannender Ringabschnitt bzw. mehrere Ringabschnitte oder anders ausgebildete Ansätze vorgesehen sind.

Weitere Einzelheiten, Merkmale und Vorteile der Erfindung ergeben sich aus der nachfolgenden Beschreibung von Ausführungsbeispielen der Erfindung. Es zeigen:
- Fig. 1: eine Teilschnittansicht einer Ausführungsform des erfindungsgemäßen Nivellierelements,
- Fig. 2: eine Teilschnittansicht einer weiteren Ausführungsform des erfindungsgemäßen Nivellierelements, und
- Fig. 3: zur Erläuterung des technischen Hintergrunds ein bekanntes Nivellierelement.

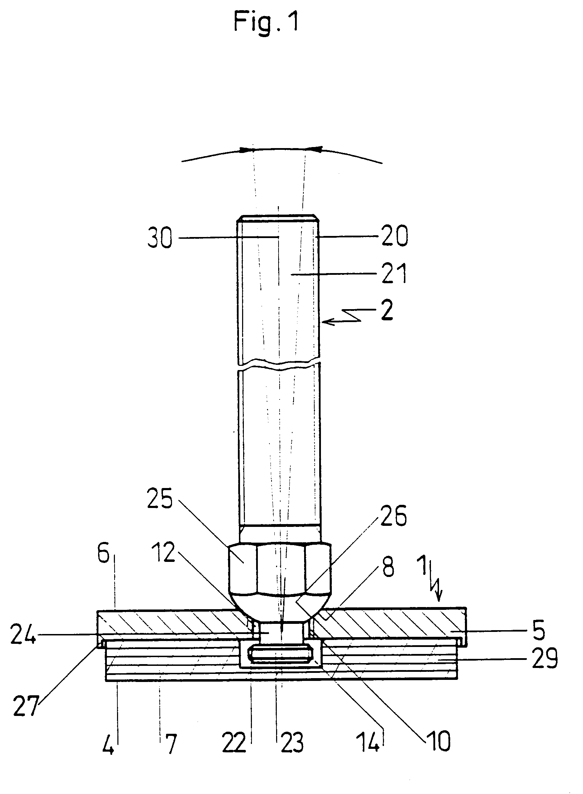

Fig. 1 zeigt eine erste Ausführungsform des erfindungsgemäßen Nivellierelements. Der Auflagekörper 1 ist aus einem Oberteil 5 mit seiner dem zu lagernden Gegenstand zugewandten Oberseite 6 und einem Unterteil 7 mit einer vom Gegenstand abgewandten Unterseite 4 zusammengesetzt. Im folgenden wird angenommen, daß der Auflagekörper 1 des Nivellierelements auf einer im wesentlichen horizontalen Ebene aufliegt und der Nivellierbolzen im wesentlichen senkrecht ausgerichtet ist. Sowohl das Oberteil 5 als auch das Unterteil 7 sind rotationssymmetrisch bezüglich einer vertikalen Achse ausgebildet. In der Oberseite des Unterteils 7 ist zentrisch eine rotationssymmetrische Aussparung 14 in Form einer nach oben offenen Sackbohrung vorgesehen. Das Oberteil 5 wird zentrisch von einem Loch 12 in Form einer Durchgangsbohrung durchsetzt, die mit einem Innengewinde 10 versehen ist, dessen Durchmesser kleiner als der Durchmesser der Aussparung 14 ist. Das Oberteil 5 weist an seiner Unterseite am Außenrand einen sich nach unten über einen Teil der axialen Länge des Unterteils 7 erstreckenden Ring 27 auf, der das Unterteil 7 radial umgreift und der relativen Verschiebung zwischen dem Oberteil 5 und dem Unterteil 7 längs ihren Kontaktflächen bei Auftreten von Horizontalkräften entgegenwirkt. Damit verhindert dieser Ring während des Aushärtens des zur Verbindung verwendeten Klebers und natürlich auch während des praktischen Einsatzes eine Beanspruchung der Klebefläche in radialen Richtungen. Außerdem hilft der Ring beim Zusammenbau des Oberteils 5 und des Unterteils 7 bei der Zentrierung dieser Teile relativ zueinander. An der Oberseite 6 des Oberteils 5 ist zentrisch eine konkave kalottenförmige Stützfläche 8 ausgebildet. Der Krümmungsradius der kalottenförmigen Stützfläche 8 ist wesentlich größer als der Radius des darunterliegenden Lochs 12.

Das obere Ende des Nivellierbolzens 2 ist als mit einem Gewinde versehener Schaft 21 ausgebildet, der von unten in einen zu lagernden Gegenstand eingeschraubt werden kann. Der Schaft 21 endet am unteren Ende in einem Auflagekopf 25, dessen dem Schaft 21 abgewandte Fläche eine zur Stützfläche 8 des Auflagekörpers 1 komplementäre kalottenförmige Auflagefläche 26 ist. Von dieser geht ein Steg 24 aus, der zur Symmetrieachse 30 des Nivellierbolzens 2 bzw. der Auflagefläche 26 und zum Schaft 21 koaxial ist. An dem dem Auflagekopf 25 abgewandten Ende des Stegs 24 ist ein Anschlag 23 vorhanden, der mit einem zum Innengewinde 10 des Lochs 12 passenden Außengewinde 22 versehen ist, dessen Durchmesser kleiner als der Durchmesser der Aussparung 14 ist. Der Nivellierbolzen 2, der Steg 24 und der Anschlag 23 sind einstückig ausgebildet. Der obere Teil des Auflagekopfs 25 weist die Form eines Außensechskants auf.

Das Besondere der vorliegenden Erfindung liegt darin, daß der Nivellierbolzen 2 mit dem Auflagekörper 1 selbst dann unverlierbar, jedoch wieder lösbar verbunden werden kann, wenn das Oberteil 5 bereits unlösbar mit dem Unterteil 7 des Auflagekörpers verbunden ist. Diese Verbindung erfolgt einfach durch Einschrauben des mit dem Außengewinde 22 versehenen Anschlags 23 in das mit dem Innengewinde 10 versehene Loch 12, bis der Anschlag 23 das Loch 12 passiert hat und in der Aussparung 14 liegt. Der Durchmesser und die Höhe der Aussparung 14 sind dabei größer zu bemessen als der Durchmesser bzw. die Höhe des Anschlags 23. Da der Außendurchmesser des Stegs 24 kleiner als der Innendurchmesser des Innengewindes 10 des Lochs 12 ist, liegt nur die konvexe kalottenförmige Auflagefläche 26 des Nivellierbolzens 2 auf der konkaven Stützfläche 8 des Auflagekörpers 1 auf, während sich die übrigen Teile des Auflagekörpers 1 und des Nivellierbolzens 2 nicht berühren. Dadurch kann die Symmetrieachse 30 des Nivellierbolzens 2 in allen Richtungen bezüglich der Symmetrieachse des Auflagekörpers 1 verschwenkt werden, wie durch mit entsprechenden Pfeilen versehene, gegen die Vertikale geneigte Symmetrieachsen angedeutet ist. Durch die Lagerung des konvex kalottenförmigen Auflagekopfs 25 in der konkav kalottenförmigen Stützfläche 8 ist jedoch gleichzeitig sichergestellt, daß sich der Nivellierbolzen 2 nicht in horizontaler Richtung relativ zum Auflagekörper 1 verschiebt. Die Abmessungen des Nivellierelements sind vorzugsweise so zu wählen, daß eine Verschwenkbarkeit um mindestens 3 Grad aus der Vertikalen, vorzugsweise um 5 Grad oder noch mehr möglich ist.

Zum Lösen des Nivellierbolzens 2 vom Auflagekörper 1 müssen diese beiden Teile nur längs ihrer Symmetrieachsen voneinander weggezogen werden, so daß das obere Ende des Außengewindes 22 des Anschlags 23 am unteren Ende des Innengewindes 10 des Lochs 12 anliegt, wonach beide Teile problemlos auseinandergeschraubt werden können.

Wenn mehrere der in Fig. 1 gezeigten Nivellierelemente an einem zu lagernden Gegenstand angebracht sind, das heißt in die entsprechenden Bohrungen eingeschraubt sind, kann dieser Gegenstand durch Ansatz eines Schraubenschlüssels am Außensechskant des Auflagekopfs 25 eines oder mehrerer der Nivellierelemente ausnivelliert werden.

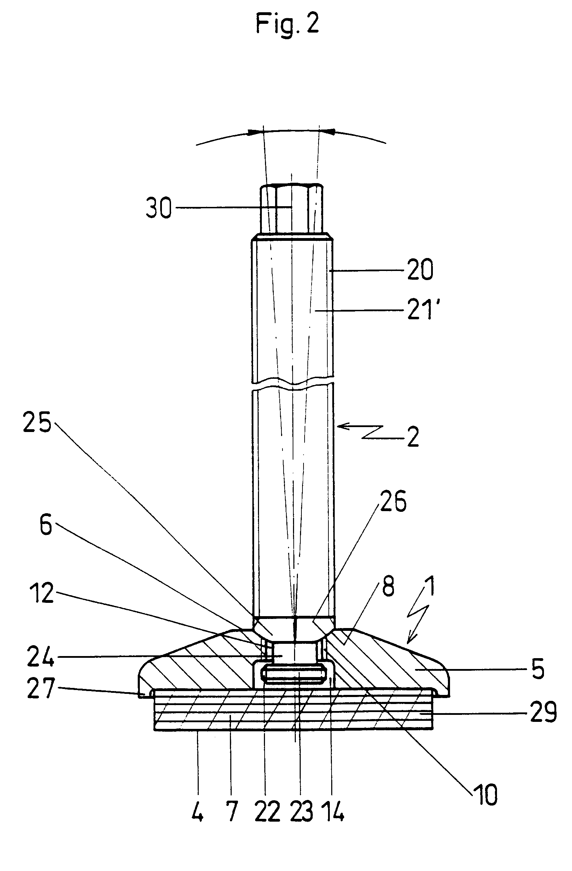

Fig. 2 zeigt eine zweite, vorteilhafte Ausführungsform der vorliegenden Erfindung. Gleiche Teile sind mit den gleichen Bezugszeichen versehen wie in Fig. 1 und werden aus Gründen der Knappheit nur dann gesondert beschrieben, wenn dies für die Unterscheidung bezüglich der ersten Ausführungsform erforderlich ist. Die zweite Ausführungsform unterscheidet sich von der ersten unter anderem insofern, als die Aussparung 14 vollständig im Oberteil 5 enthalten ist. Dies hat den Vorteil, daß die Isolierungseigenschaften des aus schwingungsisolierendem Material bestehenden Unterteils 7 nicht durch die Aussparung beeinträchtigt werden können und daß kein eigener Bearbeitungsschritt für das Vorsehen der Ausnehmung im schwingungsisolierendem Material vorgesehen werden muß. Da der zentrale Abschnitt des Oberteils 5 nun durch die Aussparung 14 geschwächt ist, sollte das Oberteil 5 zur Kompensation zum Erreichen einer ähnlicher Tragfähigkeit dicker ausgebildet sein als das entsprechende Oberteil der ersten Ausführungsform. Um das Nivellierelement nicht zu schwer werden zu lassen, wird die Dicke des Oberteils 5 ab einem bestimmten Abstand vom Zentrum zum Außenrand hin reduziert, d. h., das Oberteil 5 ist kegelstumpfförmig ausgebildet. Wenn das Oberteil in einem Gußverfahren hergestellt wird, kann dadurch auch beträchtlich Material eingespart werden.

Ein weiterer Unterschied zur ersten Ausführungsform besteht darin, daß das obere Ende des Schafts 21' als Außensechskant ausgebildet ist, der jedoch nicht wie bei der ersten Ausführungsform über den Außendurchmesser des Gewindeschafts vorsteht, sondern kleinere Außenmaße aufweist als der Gewindeschaft. Dadurch kann das derartig ausgestaltete Nivellierelement auch so eingesetzt werden, daß es von unten in entsprechende Durchgangsbohrungen eines zu lagernden Gegenstands so eingeschraubt wird, daß der Außensechskant oben aus dem entsprechenden Rahmenteil hervorragt und zum Ausnivellieren des Gegenstands verwendet werden kann. Die Schäfte 21' und 21 sind gegeneinander austauschbar.

Die Verbindung des Auflagekörpers 1 und des Nivellierbolzens 2 miteinander und deren Lösung voneinander erfolgen in gleicher Weise wie bei dem Nivellierelement der ersten Ausführungsform. Auch die weiteren Funktionen und Merkmale entsprechen denen der ersten Ausführungsform.

Vorstehend wurden Ausführungsformen mit kalottenförmiger konkaver Stützfläche 8 und kalottenförmiger konvexer Auflagefläche 26 beschrieben. Die Erfindung ist jedoch nicht hierauf beschränkt. So kann zum Beispiel die Stützfläche als konvexe Kalotte und die Auflagefläche als konkave Kalotte ausgebildet sein. Außerdem kann beispielsweise die Stützfläche als kegelstumpfförmiger Trichter und die Auflagefläche als rotationssymmetrische gekrümmte, jedoch nicht notwendigerweise kalottenförmige Oberfläche ausgebildet sein. Ferner können statt der Außensechskantflächen der Nivellierbolzen auch Vierkantflächen oder ähnliches für das Ansetzen eines Schraubenschlüssels vorgesehen sein, oder statt des Außensechskants am oberen Ende des Gewindeschafts kann auch ein Innensechskant vorhanden sein. Des weiteren muß der horizontale Querschnitt des Ober- und Unterteils des Auflagekörpers nicht rotationssymmetrisch sein, sondern kann auch quadratisch, rechteckig oder in sonst geeigneter Weise gewählt werden. In den Ausführungsbeispielen ist die Aussparung 14 durch das Unterteil 7 nach unten hin abgeschlossen. Diese Ausgestaltung ist insbesondere für Reinräume bevorzugt. Es ist jedoch auch möglich, die Aussparung bis auf den Boden des Auflagekörpers durchgehend auszubilden.

Bei dem erfindungsgemäßen Nivellierelement kann der Nivellierbolzen mit dem Auflagekörper verschraubt werden, wobei dann der Nivellierbolzen verschwenkbar auf dem Auflagekörper gelagert ist. Somit können der Auflagekörper und der Nivellierbolzen getrennt versandt und gelagert werden, was den hierfür erforderlichen Platzbedarf erheblich reduziert. Außerdem sind diese Bestandteile auch im Bedarfsfall auswechselbar, was die Flexibilität beim Einsatz erhöht. Dies ermöglicht beispielsweise ein infolge veränderter Betriebsbedingungen notwendig werdendes Ersetzen des bis dahin verwendeten Auflagekörpers durch einen anderen Auflagekörper mit einem optimal angepaßten schwingungsisolierenden Material. Darüber hinaus kann der Auflagekörper kostengünstig in großer Serie hergestellt werden, wobei die Anpassung an den jeweils zu lagernden Gegenstand durch Auswahl des passenden Nivellierbolzens erfolgt. Da der Zusammenbau des Auflagekörpers mit dem Nivellierbolzen nicht bereits beim Hersteller erforderlich ist, senkt dies auch die Herstellungskosten.

## Patentansprüche

1. Nivellierelement zur höhen- und neigungsverstellbaren Lagerung eines Gegenstands auf einer Tragfläche, umfassend einen Auflagekörper (1) und einen mit diesem unverlierbar verbundenen Nivellierbolzen (2), wobei
der Auflagekörper (1) eine vom Gegenstand abgewandte Unterseite (4) zur Auflage auf der Tragfläche und eine dem Gegenstand zugewandte Oberseite (6) aufweist, an der eine rotationssymmetrische Stützfläche (8) ausgebildet ist, von welcher ein zu ihrer Symmetrieachse koaxiales, sich zur Unterseite (4) hin erstreckendes Loch (12) ausgeht, das an seinem unteren Ende in eine Aussparung (14) mündet, deren Durchmesser größer als der Durchmesser des Lochs (12) ist, und
der Nivellierbolzen (2) einen zur höhenverstellbaren Kopplung mit dem Gegenstand dienenden Schaft (21) aufweist, der in einem Auflagekopf (25) endet, dessen dem Schaft (21) abgewandte Fläche eine an die Stützfläche (8) des Auflagekörpers (1) angepaßte rotationssymmetrische Auflagefläche (26) aufweist, von welcher ein zu ihrer Symmetrieachse und zum Schaft (21) koaxialer Steg (24) ausgeht, an dessen dem Auflagekopf (25) abgewandten Ende ein Anschlag (23) vorhanden ist, dessen Durchmesser größer als der des Stegs (24) ist, wobei
die Abmessungen so gewählt sowie die Stützfläche (8) und die Auflagefläche (26) so beschaffen sind, daß bei auf der Stützfläche (8) aufliegender Auflagefläche (26) der Steg (24) mit einem solchen Spiel in dem Loch (12) liegt und der Anschlag (23) von den Begrenzungsflächen der Aussparung (14) so beabstandet ist, daß der Nivellierbolzen (2) gegen die Symmetrieachse der Stützfläche (8) verschwenkbar und in zu dieser Symmetrieachse senkrechten Richtungen unverschiebbar gehaltert ist, und
der Durchmesser des Anschlags (23) so gewählt ist, daß er ein Herausziehen des Stegs (24) aus dem Loch (12) verhindert,
**dadurch gekennzeichnet**, daß der Steg (24) und dessen Anschlag (23) einstückige Bestandteile des Nivellierbolzens (2) sind, das Loch (12) mit einem Innengewinde (10) versehen ist und der Anschlag (23) ein entsprechendes Außengewinde (22) aufweist.

2. Nivellierelement nach Anspruch 1, **dadurch gekennzeichnet**, daß die Stützfläche (8) des Auflagekörpers (1) kalottenförmig und die Auflagefläche (26) dazu komplementär ist.

3. Nivellierelement nach Anspruch 1 oder 2, **dadurch gekennzeichnet**, daß die Stützfläche (8) des Auflagekörpers (1) eine konkave Fläche ist und die Auflagefläche (26) des Nivellierbolzens (2) eine konvexe Fläche ist.

4. Nivellierelement nach einem der vorhergehenden Ansprüche, **dadurch gekennzeichnet**, daß der Schaft (21) ein Gewindeschaft ist und ein Abschnitt des Schafts (21) oberhalb der Auflagefläche (26) in für den Angriff eines Werkzeugs zum Drehen des Schafts (21) geeigneter Weise ausgebildet ist.

5. Nivellierelement nach einem der vorhergehenden Ansprüche, **dadurch gekennzeichnet**, daß der Auflagekörper (1) aus einem die Stützfläche (8) und das Loch (12) enthaltenden Oberteil (5) und einem mit diesem verbundenen Unterteil (7) zusammengesetzt ist.

6. Nivellierelement nach Anspruch 5, **dadurch gekennzeichnet**, daß die Aussparung (14) im Oberteil (5) enthalten ist.

7. Nivellierelement nach Anspruch 5 oder 6, **dadurch gekennzeichnet**, daß der Auflagekörper (1) unterhalb des Oberteils (5) mindestens eine Lage aus schwingungsisolierendem Material (29) aufweist.

8. Nivellierelement nach Anspruch 7, **dadurch gekennzeichnet**, daß das ganze Unterteil (7) aus dem schwingungsisolierenden Material besteht.

9. Nivellierelement nach einem der Ansprüche 5 bis 8, **dadurch gekennzeichnet**, daß zur Verhinderung einer relativen Verschiebung zwischen Oberteil (5) und Unterteil (7) längs ihren Kontaktflächen das Oberteil (5) an seiner Unterseite am Außenrand zumindest längs eines Teils des Umfangs mindestens einen sich über einen Teil der axialen Länge des Unterteils (7) radial außerhalb von diesem erstreckenden Vorsprung (27) aufweist.

## Claims

1. A levelling element for mounting an article on a support surface adjustably in respect of height and inclination, including a support body (1) and a levelling bolt (2) which is captively connected thereto, wherein
the support body (1) has an underside (4) remote from the article for resting on the support surface and a top side (6) which is towards the article and on which there is provided a rotationally symmetrical support surface (8) from which there extends a hole (12) which is coaxial with respect to the axis of symmetry of the support surface (8) and which extends to the underside (4) and which at its lower end opens into a recess (14) whose diameter is larger than the diameter of the hole (12), and
the levelling bolt (2) has a shank (21) which serves for height-adjustable coupling to the article and which terminates in a support head (25) whose surface which is remote from the shank (21) has a rotationally symmetrical contact surface (26) which is adapted to the support surface (8) of the support body (1) and from which there extends a stern (24) which is coaxial with respect to the axis of symmetry of the contact surface (26) and with respect to the shank (21) and whose end which is remote from the support head (25) has an abutment (23) whose diameter is larger than that of the stern (24), wherein
the dimensions are so selected and the support surface (8) and the contact surface (26) are such that when the contact surface (26) is resting on the support surface (8) the stern (24) is disposed with such a play in the hole (12) and the abutment (23) is so spaced from the surfaces defining the recess (14) that the leveling bolt (2) is pivotable relative to the axis of symmetry of the support surface (8) and is held non-displaceably in directions which are
perpendicular to said axis of symmetry, and the diameter of the abutment (23) is so selected that it prevents the stern (24) from being pulled out of the hole (12),
characterized in that the stern (24) and its abutment (23) are integral components of the levelling bolt (2), the hole (12) is provided with a female screwthread (10) and the abutment (23) has a corresponding male screwthread (22).

2. A levelling element as set forth in claim 1 characterized in that the support surface (8) of the support body (1) is part-spherical and the contact surface (26) is complementary thereto.

3. A levelling element as set forth in claim 1 or claim 2 characterized in that the support surface (8) of the support body (1) is a concave surface and the contact surface (26) of the levelling bolt (2) is a convex surface.

4. A levelling element as set forth in one of the preceding claims characterized in that the shank (21) is a screwthreaded shank and a part of the shank (21) above the contact surface (26) is of a suitable configuration for the engagement of a tool for turning the shank (21).

5. A levelling element as set forth in one of the preceding claims characterized in that the support body (1) is composed of an upper portion (5) including the support surface (8) and the hole (12) and a lower portion (7) connected to the upper portion.

6. A levelling element as set forth in claim 5 characterized in that the recess (14) is contained in the upper portion (5).

7. A levelling element as set forth in claim 5 or claim 6 characterized in that the support body (1) has beneath the upper portion (5) at least one layer of vibration-insulating material (29).

8. A levelling element as set forth in claim 7 characterized in that the entire lower portion (7) comprises the vibration-insulating material.

9. A levelling element as set forth in one of claims 5 through 8 characterized in that to prevent relative displacement between the upper portion (5) and the lower portion (7) along the contact surfaces thereof the upper portion (5) has at its underside at the outside edge at least along a part of its periphery at least one projection (27) which extends over a part of the axial length of the lower portion (7) radially outwardly of same.

## Revendications

1. Dispositif de réglage de niveau destiné au positionnement, avec réglage en hauteur et en inclinaison, d'un objet sur une surface porteuse, comprenant un corps d'appui (1) et un boulon (2) de réglage de niveau relié à celui-ci de manière à ce qu'il ne puisse pas être perdu,
le corps d'appui (1) présentant une face inférieure (4) orientée à l'opposé de l'objet, destinée à venir en appui sur la surface porteuse, et une face supérieure (6) orientée vers l'objet, sur laquelle est réalisée une surface de soutien (8) présentant une symétrie de révolution, de laquelle part un trou (12) coaxial à son axe de symétrie et s'étendant jusqu'à la face inférieure (4), lequel trou débouche à son extrémité inférieure dans un évidement (14) dont le diamètre est supérieur à celui du trou (12),
et le boulon (2) de réglage de niveau présentant une tige (21) servant à un accouplement, réglable en hauteur, avec l'objet, laquelle tige se termine par une tête d'appui (25) dont la face orientée à l'opposé de la tige (21) comporte une surface d'appui (26) présentant une symétrie de révolution, adaptée à la surface de soutien (8) du corps d'appui (1), de laquelle surface d'appui part une barrette (24) coaxiale à son axe de symétrie et à la tige (21), à l'extrémité orientée à l'opposé de la tête d'appui (25) de laquelle barrette se trouve une butée (23) dont le diamètre est supérieur à celui de la barrette (24),
les dimensions étant choisies de façon telle, et la surface de soutien (8) et la surface d'appui (26) étant conformées de façon telle, que lorsque la surface d'appui (26) repose sur la surface de soutien (8) la barrette (24) a un tel jeu dans le trou (12) et la butée (23) est à une distance telle de la surface délimitant l'évidement (14), que le boulon de réglage de niveau (2) est maintenu de façon à pouvoir pivoter par rapport à l'axe de symétrie de la surface de soutien (8), sans pouvoir être déplacé dans des directions perpendiculaires à cet axe de symétrie,
et le diamètre de la butée (23) étant choisi de façon telle qu'il empêche que la barrette (24) soit tirée hors du trou (12),
**caractérisé en ce que** la barrette (24) et sa butée (23) sont des parties constitutives formant une seule pièce avec le boulon (2) de réglage de niveau, **en ce que** le trou (12) est muni d'un filetage intérieur (10) et la butée (23) est dotée d'un filetage extérieur (22) correspondant.

2. Dispositif de réglage de niveau selon la revendication 1, **caractérisé en ce que** la surface de soutien (8) du corps d'appui (1) a une forme de calotte et la surface d'appui (26) a une forme complémentaire de celle-ci.

3. Dispositif de réglage de niveau selon la revendication 1 ou 2, **caractérisé en ce que** la surface de soutien (8) du corps d'appui (1) est une surface concave et la surface d'appui (26) du boulon (2) de réglage de niveau est une surface convexe.

4. Dispositif de réglage de niveau selon l'une des revendications précédentes, **caractérisé en ce que** la tige (21) est une tige filetée et **en ce qu'**un tronçon de la tige (21) est conformé au-dessus de la surface d'appui (26) de façon appropriée pour l'attaque d'un outil, en vue de faire tourner la tige (21).

5. Dispositif de réglage de niveau selon l'une des revendications précédentes, **caractérisé en ce que** le corps d'appui (1) est composé d'une pièce supérieure (5) présentant la surface de soutien (8) et le trou (12) et d'une pièce inférieure (7) reliée à celle-ci.

6. Dispositif de réglage de niveau selon la revendication 5, **caractérisé en ce que** l'évidement (14) est pratiqué dans la pièce supérieure (5).

7. Dispositif de réglage de niveau selon la revendication 5 ou 6, **caractérisé en ce que** le corps d'appui (1) présente, en dessous de la pièce supérieure (5), au moins une couche de matériau (29) isolant des vibrations.

8. Dispositif de réglage de niveau selon la revendication 7, **caractérisé en ce que** l'ensemble (7) de la pièce inférieure est constitué d'un matériau isolant des vibrations.

9. Dispositif de réglage de niveau selon l'une des revendications 5 à 8, **caractérisé en ce qu'**en vue d'empêcher un déplacement relatif de la pièce supérieure (5) et de la pièce inférieure (7) le long de leurs surfaces de contact, la pièce supérieure (5) présente sur le bord extérieur de sa face inférieure, au moins sur une partie de la périphérie, au moins une saillie (27) s'étendant sur une partie de la longueur axiale de la pièce inférieure (7), radialement à l'extérieur de celle-ci.
